Europäisches Patentamt

European Patent Office

Office européen des brevets

(19)

(11) Veröffentlichungsnummer: **0 357 631 B1**

(12) **EUROPÄISCHE PATENTSCHRIFT**

(45) Veröffentlichungstag der Patentschrift:
**21.11.91 Patentblatt 91/47**

(51) Int. Cl.$^5$: **G01M 3/18**

(21) Anmeldenummer: **88903159.7**

(22) Anmeldetag: **21.04.88**

(86) Internationale Anmeldenummer:
**PCT/AT88/00023**

(87) Internationale Veröffentlichungsnummer:
**WO 88/08967 17.11.88 Gazette 88/25**

(54) **VORRICHTUNG ZUR FESTSTELLUNG UND ORTUNG VON LECKSTELLEN IN EINER EIN FEUCHTES MEDIUM FÜHRENDEN ROHRLEITUNG.**

(30) Priorität: **06.05.87 AT 1138/87**

(43) Veröffentlichungstag der Anmeldung:
**14.03.90 Patentblatt 90/11**

(45) Bekanntmachung des Hinweises auf die Patenterteilung:
**21.11.91 Patentblatt 91/47**

(84) Benannte Vertragsstaaten:
**BE CH DE FR GB LI**

(56) Entgegenhaltungen:
**DE-A- 2 337 983**
**FR-A- 2 248 651**

(73) Patentinhaber: SCHEUERMANN, Herbert
Reimersgasse 16/E4
A-1190 Wien (AT)

(72) Erfinder: SCHEUERMANN, Herbert
Reimersgasse 16/E4
A-1190 Wien (AT)

(74) Vertreter: Brauneiss, Leo et al
Patentanwälte Dipl.-Ing. Leo Brauneiss,
Dipl.-Ing. Dr. Helmut Wildhack Landstrasser
Hauptstrasse 50 Postfach 281
A-1031 Wien (AT)

## Beschreibung

Die Erfindung bezieht sich auf eine Vorrichtung zur Feststellung und Ortung von Leckstellen in einer ein feuchtes Medium führenden, insbesondere unterirdisch verlegten, Rohrleitung, mit zumindest einer entlang dieser Rohrleitung verlegten elektrisch leitenden, vorzugsweise von einem Draht gebildeten, Fühlerleitung, an die eine elektrische Speisequelle anschaltbar ist, und mit einer Verarbeitungsschaltung für die von der Fühlerleitung abgenommene Meßgröße, insbesondere eine am Ende der Fühlerleitung bestehende Spannung.

Flüssigkeitsführende Rohrleitungen finden auf zahlreichen Gebieten Anwendung, z.B. als Fernheizleitungen, Rohöl-Pipelines, Wasserversorgungsleitungen, Abwasserkanäle, Leitungen für chemisch aktive Flüssigkeiten usw. Ein ungewollter Austritt der Flüssigkeit aus der Rohrleitung ist nicht nur aus Gründen des Mediumverlustes unerwünscht, sondern bildet auch zumeist eine Umweltbelastung, wenn nicht sogar eine Gefahrenquelle. Außerdem besteht die Gefahr eines Versorgungsengpasses an der Sollabgabestelle. Es ist daher bekannt (AT-PS 351 842), die Dichtheit der Rohrleitung dadurch laufend zu überwachen, daß entlang der Rohrleitung, von dieser isoliert, ein Fühldraht verlegt wird. An der Leckstelle wird die zwischen der Rohrleitung und dem Fühldraht bestehende Isolation durch die austretende Flüssigkeit aufgehoben oder zumindest beeinträchtigt, so daß an dieser Stelle eine zumindest in Bezug auf den Ausgangszustand leitende elektrische Verbindung geschaffen wird. Dies kann durch Überwachung der an den Enden der Fühlerleitung liegenden Spannung festgestellt werden, wobei das Verhältnis der an den beiden Fühlerleitungsenden gemessenen Spannungen einen Hinweis auf den Ort des Lecks gibt. Nachteilig an der bekannten Schaltungsanordnung ist jedoch, daß sie auf die Verwendung bei elektrisch leitenden Rohrleitungen beschränkt ist, welche Voraussetzung jedoch nicht immer gegeben ist, z.B. nicht bei Wasserversorgungsleitungen aus PVC und bei Abwasserkanälen, Weiters besteht eine hohe Meßunsicherheit durch den Einfluß von elektrochemischen und elektromagnetischen Störspannungen. Untersuchungen haben nämlich gezeigt, daß elektrochemische Spannungen, die überall dort auftreten, wo sich zwei verschiedene Metalle in einem Elektrolyten befinden, voll in das Meßergebnis eingehen und eine Verfälschung desselben um viele Prozent bewirken. Dasselbe gilt in verstärktem Maß für induzierte Störspannungen, die durch das Eisenbahn- oder Straßenbahnnetz, durch das elektrische Energieversorgungsnetz, aber auch durch Hochfrequenzeinflüsse usw. hervorgerufen werden und umso stärker auftreten, je größer die Länge des als Antenne wirkenden Fühlerleitungsdrahtes ist. Der Fehler kann hier bis 100 % betragen.

Die Erfindung setzt sich zur Aufgabe, diese Nachteile zu vermeiden und eine Vorrichtung der eingangs geschilderten Art so zu verbessern, daß ihre Anwendung universeller wird und der Einfluß der erwähnten elektrochemischen und elektromagnetischen Störspannungen im wesentlichen ausgeschaltet wird. Die Erfindung löst diese Aufgabe dadurch, daß bei einer Vorrichtung der eingangs geschilderten Art ein erster Umpolungsschalter für die an die Fühlerleitung angelegte Speisequelle, ein weiterer Umpolungsschalter für die von der Fühlerleitung abgenommene Meßgröße, ein Speicher für die vor der Umpolung vorhandene Meßgröße und deren Summation mit der nach der Umpolung vorhandenen Meßgröße, und ein Integrator vorhanden sind, dem die so gewonnenen Meßgrößen als Eingangsgrößen zugeführt werden. Eine mittels der beiden Umpolungsschalter durchgeführte doppelte Messung der von der Fühlerleitung abgenommenen Meßgröße bewirkt eine automatische Elimination der elektrochemischen Störspannung, da diese ihre Richtung nicht wechselt und somit bei der Summation herausfällt. Mittels des Integrators können auch die elektromagnetisch induzierten Störspannungen eliminiert werden. Die Meßgenauigkeit der erfindungsgemäßen Vorrichtung ist im Vergleich mit der bekannten Vorrichtung daher wesentlich größer. Dies ermöglicht die Früherkennung eines sich anbahnenden Lecks und die genauere Feststellung des exakten Leckortes, was einen wesentlich verringerten Arbeits- und Zeitaufwand bei der Leckbehebung zur Folge hat.

Gemäß einer Weiterbildung der Erfindung sind der Integrator und der Speicher gemeinsam zu einer speichernden Integrationsschaltung vereinigt, wodurch der schaltungstechnische Aufwand weiter reduziert wird. Es ist gemäß einer bevorzuoten Ausführungsform der Erfindung ferner zweckmäßig, über den ersten Umpolungsschalter eine Konstantstromquelle an die Fühlerleitung anzuschalten. Bei der eingangs erwähnten bekannten Schaltungsanordnung wird hingegen an die Enden des Fühlerdrahtes eine konstante Spannung angelegt. Dies ist nachteilig, weil dann der durch den Fühlerdraht fließende Strom abhängig ist vom Gesamtwiderstand des Fühlerdrahtes, also von der Länge desselben. Bei kurzen Fühlerdrähten kommt es daher zu einem vergleichsweise hohen Strom und somit zu einer Erwärmung des Fühlerdrahtes, was seinen Widerstand ändert und eine Fehlerquelle bedeutet, die beim Erfindungsgegenstand durch den konstanten, durch die Fühlerleitung hindurchgeschickten Strom vermieden ist, Hiebei ist es gemäß einer Weiterbildung der Erfindung zweckmäßig, wenn dem Integrator und dem Speicher ein Verstärker mit hochohmigem Eingangswiderstand mit einer ebenfalls hochohmigen Schutzschaltung vorgeschaltet ist. Damit werden Fehlerströme über die Meßschaltung vermieden und der über die Fühlerleitung geschickte Strom genau konstant gehalten. Ein solcher Verstärker kann z.B. von einem Meßverstärker mit einer gesonderten Schutzschaltung für den Schutz gegen hohe Spannungsspitzen gebildet sein. Solche Spannungssgitzen können beispielsweise durch über die Fühlerleitung vorbeifahrende elektrische Bahnen hervorgerufen sein.

Die Erfindung gibt aber auch die Möglichkeit, im Falle eines Fühlerleitungsbruches diesen Bruch nicht nur festzustellen, sondern auch zu orten, was bei der eingangs erwähnten bekannten Schaltungsanordnung nicht möglich ist. Hiezu ist im Rahmen der Erfindung eine Kapazitätsmeßeinrichtung über den ersten Umpolungsschalter an die Fühlerleitung anschaltbar, der vorzugsweise eine Meßeinrichtung zur Messung des Übergangswiderstandes zwischen zwei voneinander getrennten Fühlerleitungsteilen und der Rohrleitung zugeordnet ist. Durch die Messung und Auswertung der zwischen den Fühlerleitungsteilen und dem Rohr bestehenden Kapazitäten läßt sich ein Fühlerleitungsbruch feststellen und orten, auch wenn ein Leck in der überprüften Rohrleitung vorliegt.

Es ist zweckmäßig, im Rahmen der Erfindung dem Integrator einen gesonderten Speicher nachzuschalten, um den Integrator zur Bildung der nachfolgenden Meßwerte bereitzustellen und zu vermeiden, daß die zeitaüfwendige, dafür aber sehr genaue Bildung der einzelnen Meßwerte im Integrator die Ausgabe der gewonnenen Werte an die Verarbeitungsschaltung behindert. An diese Verarbeitungsschaltung kann erfindungsgemäß über eine einzige Zweidrahtleitung eine entfernt angeordnete Energieversorgungs- und Auswertungsschaltung angeschlossen sein. Dies bringt den Vorteil, daß die für die Energieversorsung und die Auswertung nötigen Schaltungsteile, abgesehen von der erwähnten Zweidrahtleitung, an einer Stelle angeordnet werden können, die außerhalb der Reichweite der gegebenenfalls aus der Rohrleitung austretenden Flüssigkeit liegt, zweckmäßig sogar oberhalb der Erdoberfläche, wenn die Rohrleitung unterirdisch verlegt ist. Über diese Zweidrahtleitung fließen sowohl die zu Versorgung der gesamten Meßeinrichtung nötige elektrische Energie, anderseits die von der Verarbeitungsschaltung abgegebenen elektrischen Signale. Der Leitungsaufwand wird daher auf ein Minimum reduziert. Es kann hiebei die Anordnung so getroffen sein, daß die Verarbeitungsschaltung eine Ausgabeschaltung aufweist, die gegebenenfalls einen Mikroprozessor enthält. Auf diese Weise läßt sich die Signalabgabe weitgehend flexibel gestalten, gegebenenfalls über ein Fernwirkgerät an eine Zentrale, in welcher die Überwachung des gesamten Rohrleitungsnetzes erfolgt, oder, gegebenenfalls über ein Modem, mittels einer Telephonleitung an die Zentrale. Mittels des Mikroprozessors ist eine Datenvorverarbeitung möglich, dadurch läßt sich das Ausgabeformat in beliebiger Weise an die jeweils vorliegenden oder gewünschten Bedingungen anpassen, also z.B. analog oder digital durchführen. Eine Datenfernübertragung ist problemlos, etwa über Telephonleitungen möglich. Ebenso ist eine Fernsteuerung bei der erfindungsgemäßen Vorrichtung problemlos durchführbar, z.B. zwecks Testung des Gerätes mittels Simulation einer Störstelle, ob der Gerätezustand einwandfrei ist, oder zwecks Stillegung des Gerätes zur Vermeidung unnützer Alarme, z.B. dann, wenn bekannt ist, daß an einer bestimmten Stelle eine Einfeuchtung der Rohrleitungsumgebung besteht, die nicht auf einen Bruch der Rohrleitung selbst zurückzuführen ist. Es kann auch zweckmäßig sein, das Gerät kalibrieren zu können, z.B. durch Abfrage des Nullbezugswertes des vom Gerät an die Auswertungsschaltung abgegebenen Stromes, der im allgemeinen vier mA beträgt, und gegebenenfalls auch eines Maximalwertes dieses Stromes (etwa 18 bis 20 mA). Es können dann spätere vom Gerät an die Auswertungsschaltung abgegebene Signale auf diese Kalibrationswerte rückgerechnet werden.

Im Rahmen der Erfindung kann als Fühlerleitung in an sich bekannter Weise ein Draht verwendet werden, dessen Isolierung in kurzen Abständen perforiert ist, so daß an diesen Perforationsstellen die Feuchtigkeit zum Drahtmetall gelangen kann. Es ist jedoch auch in vorteilhafter Weise möglich, als Fühlerleitung einen mit einem, gegebenenfalls synthetischen, Textilmaterial umwickelten bzw. umsponnenen Draht zu verwenden.

Die Erfindung ist nicht auf die Verwendung bei elektrisch leitenden Rohrleitungen beschränkt. Vielmehr läßt sich das Erfindungsprinzip auch bei elektrisch isolierenden Rohrleitungen anwenden, in welchem Fall lediglich zusätzlich zu der bereits erwähnten Fühlerleitunq eine weitere metallische Fühlerleitung tritt, die wirkungsmäßig anstelle des metallischen Rohres tritt. Hiebei ist es zweckmäßig, im Rahmen der Erfindung das Rohr mit einem elektrisch isolierenden, jedoch feuchtigeitsdurchlässigen Mantel zu umgeben, in welchem zumindest zwei Kanäle, in Längsrichtung des Rohres verlaufend, ausgespart sind, in denen die Fühlerleitung und zumindest eine weitere Leitung, z.B. eine Erdleitung, eine Rückleitung oder die Zweidrahtleitung, verlegt ist.

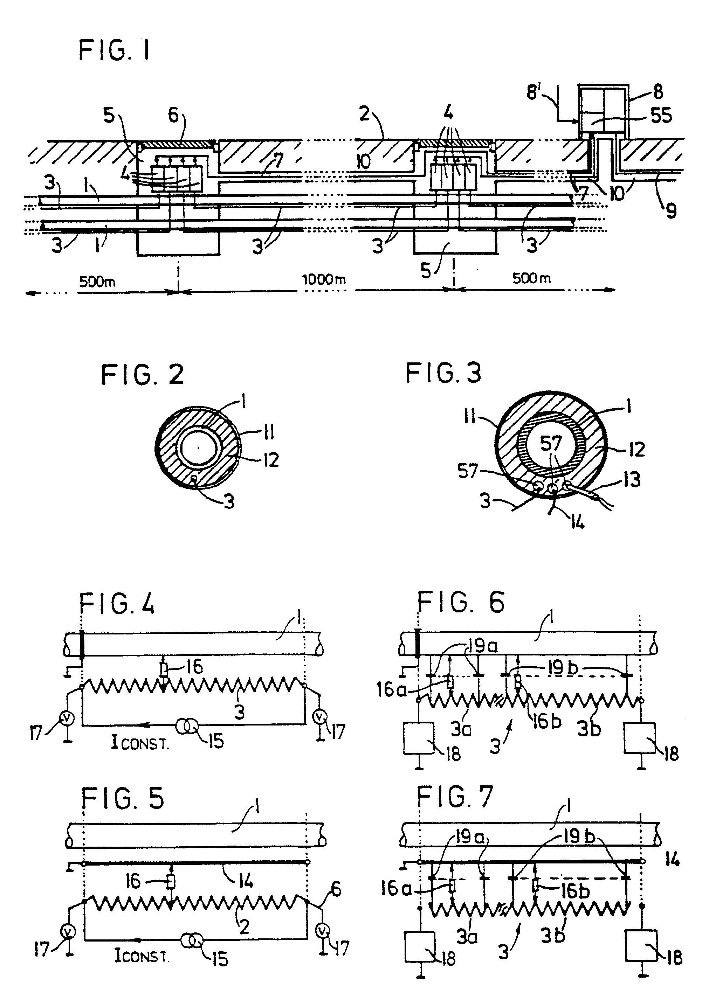

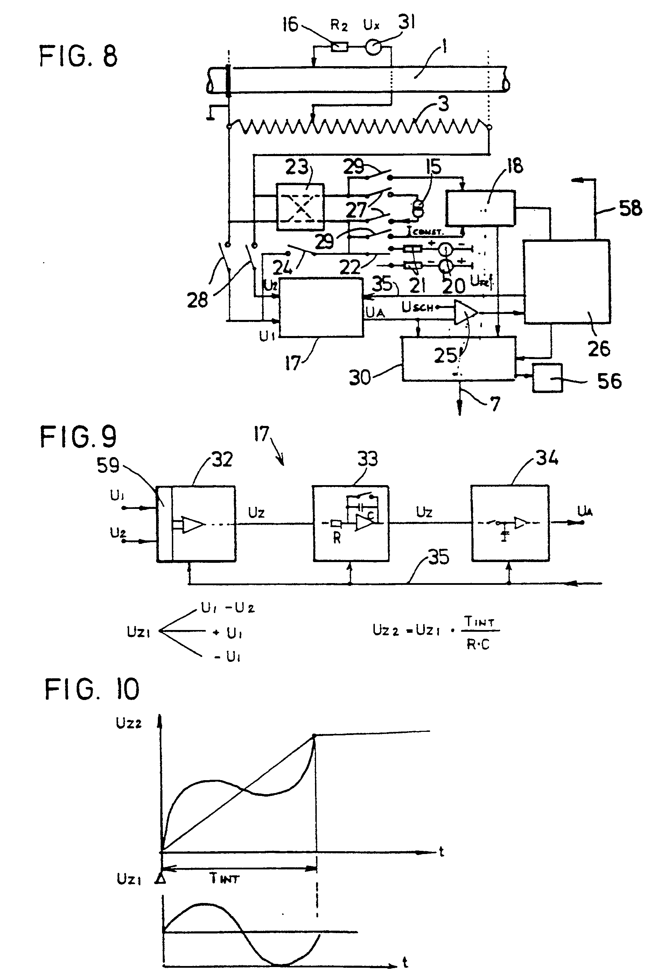

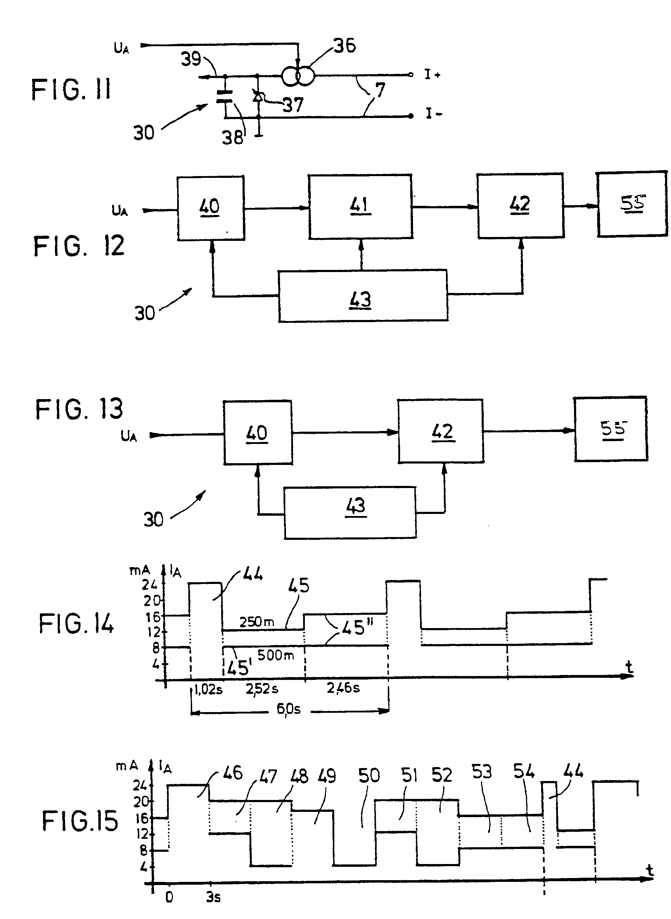

In der Zeichnung ist der Erfindungsgegenstand an Hand von Ausführungsbeispielen schematisch dargestellt. Fig.1 zeigt im Vertikalschnitt eine Übersicht über die Anlage. Fig.2 zeigt den Rohraufbau mit einer Fühlerleitung für ein elektrisch leitendes Rohr, mit Schnitt normal zu dessen Achse. Fig.3 zeigt im Schnitt ähnlich zu Fig.2 den Rohraufbau mit mehr als einer Fühlerleitung für ein elektrisch isolierendes Rohr. Fig.4 zeigt das Ersatzschaltbild des Meßprinzipes bei einer elektrisch leitenden Rohrleitung. Fig.5 zeigt ein ähnliches Ersatzschaltbild für eine elektrisch isolierende Rohrleitung. Fig.6 zeigt das Ersatzschaltbild der Erkennung eines Fühlerleitungsbruches bei einer elektrisch leitenden Rohrleitung. Fig.7 zeigt ein ähnliches Ersatzschaltbild für eine elektrisch isolierende Rohrleitung. Fig.8 zeigt ein Blockschaltbild der Verarbeitungsschaltung. Fig.9 zeigt ein etwas detaillierteres Bockschaltbild eines Bestandteiles der in Fig.8 dargestellten Verarbeitungsschaltung . Fig.10 zeigt Spannungsdiagramme des Blockschaltbildes nach Fig.9. Die Fig.11,12 und 13 zeisen drei Ausführungsvarianten von Details der Verarbeitungsschaltung. Die Fig.14 und 15 zeigen Ausgangssignale der Vorrichtung nach Fig.11 in zwei verschiedenen Betriebszuständen.

Bei der Anlage nach Fig.1 ist eine aus zwei Rohren für Vorlauf und Rücklauf bestehende Rohrleitung 1 unter der Erdoberfläche 2 verlegt. Parallel zur Rohrleitung 1 sind für jedes Rohr Fühlerleitungen 3 verlegt, die zu den Vorrichtungen zur Feststellung und Ortung von Leckstellen in der Rohrleitung 1 führen, welche Vorrichtungen in Gehäusen 4 angeordnet sind, von denen jeweils vier in einem Schacht 5 angeordnet sind, der durch einen Deckel 6 verschlossen ist. Die einzelnen Schächte 5 liegen in Abständen von etwa 1000 m. Die in den Gehäusen 4 angeordneten Vorrichtungen sind über Zweidrahtleitungen 7, welche sowohl die Ausgangssionale der in den Gehäusen 4 angeordneten Vorrichtungen führen, als auch gleichzeitig deren Stromversorgung sicherstellen, an eine Energieversorgungs- und Auswertungsschaltung 55 angeschlossen, die in einem Schaltschrank 8 oder einer Schaltwarte, zu welchem Schaltschrank eine Netzleitung 8' führt, untergebracht ist und die nötige Aufbereitung der Signale zwecks Weiterleitung zu einer Zentrale über eine Telephonleitung 9 bewerkstellig. Die Telephonleitung 9 und die Zweidrahtleitungen 7 verlaufen in Kabelkanälen 10, die zumeist mit den Rohren der Rohrleitung 1 verlegt sind. Mit einer solchen Anordnung ist eine lückenlose Lecküberwachung eines Rohrnetzes auch mit einer Länge von mehreren 100 Kilometern durchführbar, wie sie für Fernwärmenetze in Großstädten typisch ist.

Zweckmäßig ist die Fühlerleitung 3 in unmittelbarer Nähe der Rohrleitung 1 untergebracht, um schon bei einem beginnenden Leck möglichst frühzeitig eine Leckanzeige durch die aus der Rohrleitung 1 austretende Flüssigkeit zu bekommen. Da die Rohrleitung 1 nicht immer voll gefüllt ist, ist es vorzuziehen, die Fühlerleitung 3 unterhalb der Rohrleitung 1 anzuordnen (Fig.2,3). Fig.2 zeigt dies für eine Rohrleitung 1 aus elektrish leitendem Material, also z.B. für Stahlrohre. Das Rohr liegt innerhalb einer feuchtigkeitsisolierenden Umhüllung 11, der Zwischenraum ist durch einen wärmeisolierenden Mantel 12 aus einer Füllmasse ausgefüllt, in welche die Fühlerleitung 3 eingebettet ist, derart, daß die Fühlerleitung 3 relativ zum Rohr 1 elektrisch isoliert ist, ein Feuchtigkeitszutritt vom Rohr 1 zur Leitung 2 jedoch möglich ist. Die Fühlerleitung 3 kann am Rohr 1 anliegen, wenn eine Isolierunq der Fühlerleitung 3 dafür sorgt, daß im leckfreien Betriebszustand die Fühlerleitung 3 gegenüber dem Rohr 1 elektrissh isoliert ist. Hiezu kann die Isolation der Fühlerleitung 3 in kurzen Abständen perforiert sein, so daß an diesen Perforationsstellen die Feuchtigkeit zum Drahtmaterial der Fühlerleitung gelangen kann, oder es kann der Draht der Fühlerleitung 3 mit einem Textilmaterial, z.B. Seide, umsponnen bzw. umwickelt sein, derart, daß die Feuchtidkeit die so gebildete Isolierschicht durchdringen kann.

Der Rohraufbau nach Fig.3 eignet sich auch für Rohre 1 aus elektrisch isolierendem Material, z.B. für Kunststofrohre von Wasserversorgungsleitungen. In ähnlicher Weise wie bei Fig.2 ist das Rohr 1 von einer wässerdichten Umhüllung 11 in Abstand umgeben, wobei der Zwischenraum durch einen Mantel 12 sus einer Füllmasse, z.B. wasserdurchlässioer Schaumstoff, ausgefüllt ist. In diesem Mantel 12 sind mehrere in Längsrichtung des Rohres 1 verlaufende Kanäle 57 ausgespart, in welche mehrere Leitungen verlegt sind, und zwar zusätzlich zur Fühlerleitung 3, die diesmal von einem blanken Widerstandsdraht mit definiertem spezifischen Widerstandswert (Ohm/m) gebildet sein kann, noch eine Rückleitung 13 mit langlebiger Isolation, z.B. Teflon, und eine Erdleitung 14. Die Rückleitung 13 ist zweckmäßig zweipolig ausgebildet, um einerseits die Stromrückführung und anderseits eine Spannungsmessung zu erlauben, was später noch näher beschrieben wird, und besteht zweckmäßig aus Kupfer. Die Erdleitung 14 besteht ebenfalls aus Kupfer oder noch besser aus dem gleichen Material wie der Widerstandsdraht der Fühlerleitung 3, um elektrochemische Prozesse zwischen den beiden Leitungen 3,14 zu vermeiden.

Die Variante des Rohraufbaues nach Fig.3 ist in Massenfertigung kostensünstig herstellbar und kann direkt im Erdreich verlegt werden, wobei alle Elemente für die Leckortung bereits automatisch mitverlegt werden. Diese Variante ist gegenüber der in Fig.2 dargestellten Variante vorteilhaft, da letztere Variante zusätzliche Kabelkanäle für die Rückleitung benötigt und nur für elektrisch leitende Rohre Anwendung finden kann.

Fig.4 zeigt das Meßprinzip für die Leckortung bei einer elektrisch leitenden Rohrleitung 1, welche von der Fühlerleitung 3 begleitet wird (Rohraufbau nach Fig.2). An die beiden Enden der Fühlerleitung 3 ist eine Konstantstromquelle 15 angeschlossen, die einen Strom $I_{const}$ durch die Fühlerleitung 3 schickt und derart an dieser einen definierten Spannungsabfall erzeugt. Bildet sich nach Auftreten eines Lecks eine - wenn auch sehr schwach - leitfähige Stelle zwischen der Rohrleitung 1 und der Fühlerleitung 3, was durch einen Leckwiderstand 16 angedeutet ist, so nimmt die Fühlerleitung 3 an dieser Stelle das Potential der Rohrleitung 1, im allgemeinen Erdpotential (0 Volt) an. Die Enden der Fühlerleitung 3 nehmen dann dem Leckort proportionale Spannungen gegen das Rohrpotential an, welche mit Spannunosmeßeinrichtunqen 17 mit sehr hohem Eingangswiderstand (höher als ein Gigaohm) gemessen werden können. Auf Grund dieses sehr hochohmigen Eingangswiderstandes und des potentialfreien "Schwimmens" der Konstantstromquelle 15 bleiben Variationen des Leckwiderstandes 16 im Bereich von 0 bis 500 kOhm ohne Einfluß auf die Meßgenauigkeit.

Fig.5 zeigt dasselbe Meßprinzip bei Verwendung einer elektrisch isolierenden Rohrleitung 1 (Rohraufbau nach Fig.3). Der Bezugspunkt ist hier von der Erdleitung 14 gebildet, ansonsten ist die Funktion gleich jener nach Fig.4.

Fig.6 zeigt das Meßprinzip für die Ortung eines Bruches der Fühlerleitung 3, durch welchen bruch diese Fühlerleitung in zwei Abschnitte 3a,3b geteilt wird. Dieser Bruch der Fühlerleitung 3 hat zunächst zur Folge, daß die in Fig.6 der Einfachheit halber nicht darsestellte Konstantstromquelle 15 bestrebt ist, durch den durch die Bruchstelle gegebenen hohen Widerstand der Fühlerleitung 3 weiterhin den konstanten Strom $I_{const}$ durch die Fühlerleitung 3 zu treiben, Dadurch steigt die Spannung an der Konstantstromquelle 15 an, was durch die Spannungsmeßeinrichtungen 17 (Fig.4) angezeigt wird und bei Überschreiten eines vorbestimmten Grenzwertes einen Alarm auslöst, welcher den Bruch der Fühlerleitung 3 in geeigneter Weise meldet. Diese Meldung aktiviert automatisch Kapazitätsmeßeinrichtungen 18, durch welche eine Messung des Verhältnisses der Kapazitätswerte 19a,19b zwischen den Fühlerleitungsteilen 3a,3b und der Rohrleitung 1 erfolgt. Dies ergibt einen Rohwert für den Bruchort, da sich die Kapazitätswerte 19a,19b proportional zu den Längen der beiden Fühlerleitungsteile 3a,3b verhalten, Um dieses System auch wirksam zu machen, wenn ein Leck in der Rohrleitung 1 vorliegt, werden zusätzlich noch die Leckwiderstände 16a, 16b zwischen den beiden Fühlerleitungsteilen 3a,3b und der Rohrleitung 1 gemessen, was die Möglichkeit gibt, in einem weiteren Berechnungsvorsang die beiden Leckwiderstände 16a,16b zur Korrektur der Kapazitätsrohwerte und damit der über das Kapazitätsverhältnis ermittelten Bruchortüng heranzuziehen.

Fig.7 zeigt im wesentlichen das gleiche Meßprinzip wie die Fig.6, lediglich in Anwendung auf eine elektrisch isolierende Rohrleitung 1, wobei wieder als Bezugspunkt eine zur Fühlerleitung 3 zusätzliche Erdleitung 14 tritt.

Die zur Durchführung dieser Leckfeststellungs- und Leckortungsvorgänge dienende Vorrichtung ist im Blockschaltbild in Fig.8 dargestellt. Im Ruhezustand (kein Leck erkannt) wird eine von einer Spannungsquelle 20 erzeugte Referenzspannung $U_{ref}$ (z.B. + 1V abwechselnd mit - 1V) über einen Meßwiderstand 21, einen elektronischen Umpo, lungsschalter 22 und einen Umpolunosschalter 23, z.B. einen Kreuzschalter, mit wechselnder Polarität an die Fühlerleitung 3 gelegt. Der Sinn dieser wechselnder Polarität der Referenzspannung liegt darin, elektrochemische Einflüsse auszuschalten. Wäre die Polarität stets dieselbe, so ergäbe sich im Laufe der Zeit eine elektrochemische Materialwanderung entweder von der Fühlerleitung 3 zur Rohrleitung 1 oder umgekehrt. Die wechselnde Polarität vermeidet diesen Effekt. Liegt nun ein Leckwiderstand 16 vor, so fließt über diesen ein Strom, dessen Größe umgekehrt proportional zur Größe des Leckwiderstandes 16 ist und der am Meßwiderstand 21 einen Spannungsabfall hervorruft, der über einen elektronischen Schalter 24 von der Spannungsmeßeinrichtung 17 gemessen und mit einem vorbestimmten Spannungsschwellwert $U_{sch}$ in einer Vergleichsschaltung 25 verglichen wird. Übersteigt der durch den Leckstrom hervorgerufene Spannungswert an der Vergleichsschaltung 25 die vorgegebene Vergleichsspannung $U_{sch}$, so schaltet die Vergleichsschaltung 25 um und bringt damit eine digitale Ablaufsteuerung 26 in einen neuen Betriebszustand, dessen Ausgangssignale in Fig.15 dargestellt sind, wogegen die Ausgangssignale des vorherigen Betriebszustandes in Fig.14 dargestellt sind. Es beginnt nun der Leckortmeßzyklus, wobei anstelle der Spannungsquelle 20 die Konstantstromquelle 15 über einen elektronischen Schalter 27 und den Umpolungsschalter 23 an die Fühlerleitung 3 gelegt wird. Wie an Hand der Fig.4 bzw.5 beschrieben wurde, muß jetzt nur mehr die an den Enden der Fühlerleitung 3 auftretende Spannung gemessen werden, zu welchem Zweck diese beiden Spannungen über elektronische Schalter 28 an die Spannungsmeßeinrichtung 17 gelegt werden. Zweckmäßig löst hiebei die Ablaufsteuerung 26 eine nochmalige Prüfung aus, ob der Leckwiderstand 16 noch immer zu klein ist (nochmaliger Leckortmeßzyklus). Ergibt diese nochmalige Prüfung, daß der Leckwiderstand einen vorbestimmten Grenzwert nicht überschreitet, führt die Ablaufsteuerung 26 die gesamte Vorrichtung in den Ruhezustand wieder zurück, in welchem die Spannungsquelle 20 an der Fühlerleitung 3 liegt, und zwar mittels einer durch den Umpolungsschalter 22 wechselnden Polarität.
Es wäre auch denkbar, zur Umpolung der Spannungsquelle 20 den Umpolungsschalter 23 zu verwenden.

Zusätzlich wird laufend mit Hilfe der Konstantstromquelle 15 über die Schalter 27,23,28 mittels der Spannungsmeßeinrichtung 17 und der Vergleichsschaltung 25 geprüft, ob eine Unterbrechung der Fühlerleitung 3 vorliegt, was - wie bereits erwähnt - dadurch angezeigt wird, daß die Spannungswerte an den äußeren Enden der Fühlerleitung 3 über einen vorbestimmten Wert ansteigen. Ist dies der Fall, so leitet die Ablaufsteuerung 26 eine Messung der Kapazitätswerte der beiden Fühlerleitungsabschnitte 3a,3b (Fig.6,7) über die Kapazitätsmeffeinrichtung 18 ein, welche über elektronische Schalter 29 und den Umpoler 23 angeschaltet wird. Dies währt so lange, bis der Bruch der Fühlerleitung 3 behoben ist. Das entsprechende Meßprinzip wurde an Hand der Fig.6 und 7 erläutert.

Die Ausgangsspannung $U_A$ der Spannungsmeßeinrichtung 17 wird einer Verarbeitungsschaltung 30 zugeführt, an welche die Zweidrahtleitung 7 (Fig.1) als Ausgangsleitung angeschlossen ist. Das über diese Leitung 7 abgegebene Ausgangssignal kann hinsichtlich seines Formates mittels der digitalen Ablaufsteuerung 26 an verschiedenste Geräte in einfachster Weise angepaßt werden, was später noch näher beschrieben wird.

Die digitale Ablaufsteuerung 26 versorgt über nur schematisch dargestellte Leitungen 58 alle zu schaltenäen Bauteile der Schaltung nach Fig.8 mit den entsprechenden Steuersignalen.

Wesentlich ist, daß bei allen bisher beschriebenen Meßvorgängen zusätzlich zwei wesentliche Störgrößen berücksichtigt bzw. unterdrückt werden, und zwar einerseits die elektrochemische Störspannung $U_x$ (dargestellt durch eine symbolische Spannungsquelle 31 in Fig.8), welche immer dann entsteht, wenn verschiedene Metalle sich in einem Elektrolyten befinden, und andererseits die in der langen Fühlerleitung 3 durch Fremdeinflüsse induzierte elektromagnetische Störspannung. Die elektrochemische Störspannung $U_x$ kann Werte bis zu 1V erreichen, also in derselben Größenordnung liegen wie die Spannung der Spannungsquelle 20, was bedeutende Fehler zur Folge haben kann. Die auf elektromagnetischem Weg induzierten Spannungsspitzen können noch höhere Werte erreichen, treten jedoch im allgemeinen nur kurzzeitig auf oder haben konstante Frequenz. Zur Unterdrückung dieser beiden Störgrößen dient die in Fig.9 dargestellte nähere Ausbildung der Spannungsmeßeinrichtung 17, welche im wesentlichen einen von einem schaltbaren Verstärker gebildeten Umpolungsschalter 32, eine speichernde Integrationsschaltung 33 und einen weiteren Speicher 34 aufweist. Alle diese Schaltungsblöcke 32,33,34 sind über Steuerleitungen 35 von der Ablaufsteuerung 26 aus steuerbar. Es erfolgt in der Integrationsschaltung 33 eine zweimalige Integration der Ausgangsspannung des vom schaltbaren Verstärker gebildeten Umpolungsschalters 32. Bei diesen beiden Integrationsphasen wird jedoch die Speisequelle (entweder konstanter Meßstrom von der Konstantstromquelle 15 oder Bezugssannung von der Spannungsquelle 20) über den Umpolungsschalter 23 bzw.22 umgepolt. Zugleich wird der vom Verstärker gebildete Umpolungsschalter 32 bei den beiden Integrationsphasen umgepolt. Dadurch liegt das Meßsignal durch die zweimalige Umpolung der beiden Integrationsphasen in jeweils gleicher Polarität vor, wogegen die Störspannung $U_x$ die Umpolung des Umpolungsschalters 23 nicht mitmacht, wohl aber die Umpolung am Umpolungsschalter 32. Bei der anschließenden Summation in der Integrationsschaltung 33 fällt daher die Störspannung $U_x$ heraus, nicht aber die Meßspannung, die als doppelter Wert $U_{Z2}$ am Ausgang der Integrationsschaltung 33 auftritt. Dieser Meßablauf wird über die Steuerleitung 35 von der digitalen Ablaufsteuerung 26 gesteuert. Der schaltbare Verstärker, welcher den Umpolungsschalter 32 bildet, dient somit in erster Linie zur Filterung der elektrochemischen Störspannung $U_x$. Durch geeignete Wahl der R-C-Konstante und des Integrationszeitintervalles $T_{int}$ der Integrationsschaltung 33 erhält man am Ende der zweimaligen Integration einen definierten Wert an Signalspannung.

Durch diese zweimalige Integration der vom Umpolungsschalter gelieferten Soannung $U_{Z1}$ wird zugleich auch die elektromagnetische Störspannung unterdrückt. Hiezu braucht lediglich die Länge der Integrationsphase ($T_{int}$) gezielt auf die vorwiegend auftretenden Grundfrequenzen bzw. niederen Oberwellen der Störspannungen abgestimmt zu werden. Eine Skizze hiezu ist in Fig.10 dargestellt. Sie zeigt im unteren Teil des Diagrammes einerseits den ungestörten Wert der Eingangsspannung $U_{Z1}$ an der Integrationsschaltung 33, andererseits den diesem Wert überlagerten Störspannungswert, dessen Frequenz etwa mit 50 Hz angenommen sei. Die Ausgangsspannung $U_{Z2}$ an der Integrationsschaltung 33 ist im oberen Teil des Diagrammes nach Fig.10 veranschaulicht. Durch die Integration wird der Störspannungseinfluß ausgeschaltet, wobei wesentlich ist, daß das Zeitintervall $T_{int}$ auf die Grundfrequenz der Störung abgestimmt ist. Bei Auftreten mehrerer Störfrequenzen können diese gemeinsam erfaßt werden, nach der Formel $T_{int} = \dfrac{1}{f_{stör}} \cdot n$, wobei n eine ganze Zahl bedeutet. Nimmt man als die wesentlichsten Störfrequenzen 16 2/3 Hz (Bahnfrequenz), 50 Hz (kontinentales Energienetz) und 60 Hz (USA-Energienetz) an, so ist $T_{int}$ mit 300 Millisekunden geeignet gewählt. Für Störfrequenzen $f_{stör}$, welche diese Gleichung nicht erfüllen, läßt sich das Gerät einfach nach der geoebenen Formel so anpassen, daß alle in Frage kommenden Störfrequenzen die angegebene Gleichung erfüllen. Ist eine Abstimmung auf die Grundwelle erfolgt, so ist eine Abstimmung auf die ganzzahligen Oberwellen der Grundwelle zu 100% gegeben. Diese Filterungsart hat gegenüber einer herkömmlichen Filterung mittels eines Filters den Vorteil einer wesentlich besseren Wirksamkeit im tiefen Frequenzbereich.

Mittels des gesonderten Speichers 34 wird eine lückenlose Ausgabe der Meßwerte ermöglicht. Es muß ja berücksichtigt werden, daß ein von der Integrationsschaltung 33 kommender Meßwert übernommen und bis zur Übernahme des nächsten Meßwertes mit ausreichender Genauigkeit gehalten werden muß. Diesen Zweck erfüllt der Speicher 34, Dadurch wird die Integrationsschaltung 33 zur Bildung der nachfolgenden Meßwerte bereit und kann diese wiederum zum richtigen Zeitpunkt (bestimmt durch die Ablaufsteuerun, 26) an den Speicher 34 weitergeben. Die zeitaufwendige, dafür aber sehr genaue Bildung der einzelnen Meßwerte in der Integrationsschaltung 33 beeinflußt daher die Ausgabe kontinuierlicher Meßwerte $U_a$ an die Verarbeitungsschaltung 30 nicht.

Wie bereits erwähnt, muß die Spannungsmeßeinrichtung 17 sehr hochohmigen Eingangswiderstand haben. Es ist auch zweckmäßig, den Verstärker 32 mit einer Schutzschaltunl 59 mit sehr hochohmigem Eingangswiderstand zu versehen, um Störungen durch Spannungsspitzen der der Spannungsmeßeinrichtung 17 zugeführten Spannung zu vermeiden.

In den Fig.11,12 und 13 sind Ausführungsbeispiele dargestellt, wie die von der Spannungsmeßeinrichtung 17 abgegebene Spannung $U_A$ weiter aufbereitet werden kann. Gemäß Fig.11 ist diese Spannung $U_A$ als Steuerspannung an eine steuerbare Stromquelle 36 gelegt, die im Stromkreis der Zweidrahtleitung 7 (Fig.1) liegt, welche eine Stromschleife für einen Schleifenstrom I bildet, welcher zwischen 4 mA und 20 mA - entsprechend dem anzuzeigenden Zustand der Rohrleitung 1 - schwankt. Über eine Diode 37 und einen Speicherkondensator 38 wird zugleich die Spannungsversorgung für die in Fig.8 dargestellte Vorrichtung gewonnen, wozu eine Leitung 39 dient. Die Zweidrahtleitung 7 führt zum Schaltschrank 8, in welchem eine weitere Auswertung in beliebiger Weise erfolgen kann.

Die Schaltung nach Fig.12 zeigt digitale Schnittstellen, wobei die Ausgangsspannung $U_A$ der Spannungsmeßeinrichtung 17 in der Verarbeitungsschaltung 30 mittels eines Analog-Digital-Umsetzers 40, zweckmäßig mit 12 bit, digitalisiert wird und nach einer Parallel/Seriell-Konversion in einem weiteren Umsetzer 41 über eine Schnittstellenanpassung 42 an eine zur Auswertungsschaltung führendeLeitung gelegt wird. Die Schnittstellenanpassung 42 erzeugt die notwendigen Steuersignale für das jeweilige Auswertegerät und wird ihrerseits von einem Mikroprozessor 43 bedient, der eine maximale Systemflexibilität gewährleistet, da durch neue Software und geänderte Schnittstellenanpassungen 42 die Meßdaten in praktisch jedes beliebige Format gebracht werden können. Außerdem ist eine, auch aufwendige, Vorverarbeitung der Daten mittels des Mikroprozessors 43 möglich.

Fig.13 zeigt eine Ausführungsvariante zu Fig.12, wobei der Umsetzer 41 für die Parallel-Seriell-Konversion entfällt. Die Auswertungsschaltung 55, die zweckmäßig im Schaltschrank 8 (Fig.1) angeordnet ist, kann mit an sich bekannten Bauelementen in beliebiger Weise ausdebildet werden.

Die Fig.14 zeigt Auswertungssignale, die von der Vorrichtung gemäß Fig.11 abgegeben werden, wenn weder ein Leck in der Rohrleitung 1 noch ein Bruch in der Fühlerleitung 3 vorliegt. Das Signal hat eine Periodendauer von 6 Sekunden und setzt sich aus einem Synchronimpuls 44 voller Stromstärke (etwa 24 mA) und einem diesem folgenden Folgesignal zusammen, das unterschiedliche Gestalt hat, je nachdem, ob eine Länge der Rohrleitung 1 von 250 m oder von 500 m überwacht wird. Bei einer Überwachung einer Rohrleitungslänge von 250 m ist das Folgesignal 45 etwa 12mA. Bei Überwachung einer Leitungslänge von 500 m ist das Folgesignal 45' etwa 8 mA, so daß eine deutliche Unterscheidung zwischen den beiden Folgesiqnalen 45 bzw. 45' möglich ist. Es folgt dann im Auswertungssignal das Signal 45", welches im Wertbereich zwischen 8 und 16 mA liegt, wobei dieser Wert umgekehrt proportional zum Leckwiderstand 16 ist und eine laufende Kontrolle der Feuchtiskeit um die Rohrleitung 1 ermöglicht.

Dieser Grundzustand ändert sich, sobald ein Leck festgestellt wird. Der Abschnitt 46 (Fig.15) dauert 3 Sekunden und unterscheidet sich daher trotz gleicher Amplitude deutlich vom Synchronsignal 44 und gibt einen Leckalarm. Die folgenden Abschnitte 47 bis 54 geben, je nach dem gewählten Programm, Aufschluß über Gesamtlänge des Meßabschnittes, Leckort, maximale Meßabschnittlänge, Nullpunktwert, Leckwiderstandsberechnung usw. Es ist zweckmäßig, nach der Signalphase 54 wieder in den Grundzustand zurückzukehren (Synchronimpuls 44) und erneut zu prüfen, ob das Leck noch vorhanden ist. Ist dies der Fall, so wird das Leckalarmsignal erneut abgegeben.

Weitere Vorteile des Gerätes liegen in einer Möglichkeit einer Datenfernübertragung, in einem vergleichsweise geringen Aufwand bei hoher Störungsunempfindlichkeit und einer Möglichkeit zur Fernsteuerung. Für eine solche Fernsteuerung kann die Verarbeitunasschaltung 30 in einfacher Weise einen Empfänger 56 (Fig.8) für Fernsteuerimpulse aufweisen, die über die Zweidrahtleitung 7 von der Zentrale aus an die Vorrichtung gesendet werden.

Weiters besteht die Möglichkeit einer Datenvorverarbeitung, wobei die Rohwerte des Meßergebnisses (Momentanwert des Leckwiderstandes, maximale Meßabschnittslänge; im Leckfall noch zusätzlich: Tatsächliche Meßabschnittslänge, Leckort in Prozent davon, Bezugswert 100 %, Bezugswert 0 %; übergeordnet noch laufend: Fühlleitungsbruch, Fühlleitungskurzschluß) nach Einstecken einer Zusatzkarte, welche einen Mikrocomputer trägt, laufend gesammelt und überwacht werden können, Die Verhaltensweise der Meßeinrichtung nach außen ist somit frei programmierbar und erlaubt die Ausgabe der Meßwert- bzw. Alarmsignale in einem geeigneten digitalen Format, welches die Ankopplung über ein handelsübliches Modem an eine gewöhnliche Telephonleitung erlaubt, was eine Fernüberwachung über beliebige Distanzen ermöglicht.

**Patentansprüche**

1. Vorrichtung zur Feststellung und Ortung von Leckstellen in einer ein feuchtes Medium führenden, insbesondere unterirdisch verlegten, Rohrleitung, mit zumindest einer entlang dieser Rohrleitung verlegten elektrisch leitenden, vorzugsweise von einem Draht gebildeten, Fühlerleitung, an die eine elektrische Speisequelle anschaltbar ist, und mit einer Verarbeitungsschaltung für die von der Fühlerleitung abgenommenen Meßgröße, insbesondere eine am Ende der Fühlerleitung bestehende Spannung, gekennzeichnet durch einen ersten Umpolungsschalter (22 bzw.23) für die an die Fühlerleitung (3) angelegte Speisequelle (20,15), einen weiteren Umpalungsschalter (32) für die von der Fühlerleitung (3) abgenommene Meßgröße, einen Speicher für die vor der Umpolung vorhandene Meßgröße und deren Summation mit der nach der Umpolung vorhandenen Meßgröße, und einen Integrator, dem die so gewonnenen Meßgrößen als Eingangsgrößen zugeführt werden.

2. Vorrichtung nach Anspruch 1, dadurch gekennzeichnet, daß der Integrator und der Speicher gemeinsam zu einer speichernden Integrationsschaltung (33) vereinigt sind.

3. Vorrichtung nach Anspruch 1 oder 2, dadurch gekennzeichnet, daß über den ersten Umpolungsschalter (23) eine Konstantstromquelle (15) an die Fühlerleitung (3) anschaltbar ist.

4. Vorrichtung nach Anspruch 3, dadurch gekennzeichnet, daß dem Integrator (33) ein Verstärker (32) mit hochohmigem Eingangswiderstand und hochohmiger Schutzschaltung (59) vorgeschaltet ist.

5. Vorrichtung nach Anspruch 4, dadurch gekennzeichnet, daß der Verstärker (32) umpolbar ist und den weiteren Umpolungsschalter bildet.

6. Vorrichtung nach einem der Ansprüche 1 bis 5, dadurch gekennzeichnet, daß eine Kapazitätsmeßeinrichtung (18) über den ersten Umpolungsschalter (23) an die Fühlerleitung (3) anschaltbar ist, und daß vorzugsweise dieser Kapazitätsmeßeinrichtung eine Meßeinrichtung zur Messung der Übergangswiderstände (16a,16b) zwischen zwei voneinander getrennten Fühlerleitungsabschnitten (3a,3b) und der Rahrleitung (1) zugeleitet ist.

7. Vorrichtung nach einem der Ansprüche 1 bis 6, dadurch gekennzeichnet, daß dem Integrator ein gesonderter Speicher (34) nachgeschaltet ist.

8. Vorrichtunc nach einem der Ansprüche 1 bis 7, dadurch gekennzeichnet, daß an die Verarbeitungsschaltung (30) über eine einzige Zweidrahtleitung (7) eine entfernt angeordnete Energieversorgungs- und Auswertungsschaltung angeschlossen ist.

9. Vorrichtung nach einem der Ansprüche 1 bis 8, dadurch gekennzeichnet, daß eine digitale Ablaufsteuerung (26) zur Steuerung zumindest der Umpolungsschalter (23,32) und des Integrators (33) sowie des zusätzlichen Speichers (34) vorhanden ist, wobei gegebenenfalls diese Ablaufsteuerung (26) einen Mikroprozessor aufweist.

10. Vorrichtung nach einem der Ansprüche 1 bis 9, dadurch gekennzeichnet; daß die Verarbeitungsschaltung (30) einen Mikroprozessor (43) zwecks Vorverarbeitung der vom Integrator (33) gelieferten Meßwerte und zwecks Schnittstellenanpassung aufweist.

11. Vorrichtung nach einem der Ansprüche 1 bis 10, dadurch gekennzeichnet, daß die Verarbeitungsschaltung (30) einen Empfänger für Fernsteuerimpulse hat.

12. Vorrichtung nach einem der Ansprüche 1 bis 11, dadurch gekennzeichnet, daß als Fühlerleitung (3) ein mit einem, gegebenenfalls synthetischen, Textilmaterial umwickelter bzw. umsponnener Draht dient.

13. Vorrichtung nach einem der Ansprüche 1 bis 12, dadurch gekennzeichnet, daß die Rohrleitung (1) von einem elektrisch isolierenden, jedoch feuchtigkeitsdurchlässigen Mantel (12) umgeben ist, in welchem zumindest zwei in Längsrichtung der Rohrleitung (1) verlaufende Kanäle (57) ausgespart sind, in welchen die Fühlerleitung (3) und zumindest eine weitere Leitung, z.B. eine Rückleitung (13), eine Erdleitung (14), die Zweidrahtleitung (7) usw., verlegt sind.

14. Vorrichtung nach einem der Ansprüche 1 bis 13, dadurch gekennzeichnet, daß die Länge $T_{Int}$ der Integrationsspase des Integrators (33) der Formel

$$T_{Int} = \frac{1}{f} \cdot n$$

entsprich;, worin $f_{stör}$ die Grundfrequenz der auftretenden Störspannung und n eine ganze Zahl bedeuten.

**Claims**

1. A device for determining and locating points of leakages in a pipe line, in particular laid underground and conveying a wet medium, with at least one electrically conducting sensor line, preferably formed by a wire, laid along this pipe line, to which an electric power supply is able to be connected and with a processing circuit for the measured variable taken from the sensor line, in particular a voltage existing at the end of the sensor line, characterised by a first polarity reversal switch (22 or 23) for the power supply (20,15) applied to the sensor line (3), a further polarity reversal switch (32) for the measured variable taken from the sensor line (3), a memory for the measured variable present before polarity reversal and the summation thereof with the measured variable present after polarity reversal and an integrator, to which is supplied the measured variables obtained as input variables.

2. A device according to claim 1, characterised in that the integrator and the memory are combined together to form a storing integration circuit (33).

3. A device according to claim 1 or 2, characterised in that by way of the first polarity reversal switch (23) a constant current source (15) is able to be connected to the sensor line (3).

4. A device according to claim 3, characterised in that an amplifier (32) with a high input resistance and with a high resistance protective circuit (59) is connected before the integrator (33).

5. A device according to claim 4, characterised in that the amplifier (32) is able to have a polarity reversal and forms the further polarity reversal switch.

6. A device according to one of claims 1 to 5, characterised in that a capacitance measuring device (18) is able to be connected by way of the first polarity reversal switch (23) to the sensor line (3), and in that preferably this capacitance measuring device has leading to it a measuring device for measuring the contact resistance (16a, 16b) between two sensor line sections (3a, 3b), separated from one another, and the pipe line (1).

7. A device according to one of claims 1 to 6, characterised in that a separate memory (34) is connected after the integrator.

8. A device according to one of claims 1 to 7, characterised in that connected to a processing circuit (30) by way of a single two-wire line (7) there is a remote disposed energy supply- and evaluating circuit.

9. A device according to one of claims 1 to 8, characterised in that a digital sequence control system (26) is provided for controlling at least the polarity reversal switches (23,32) and the integrator (33) as well as the additional memory (34), wherein if necessary this sequence control system (26) has a microprocessor.

10. A device according to one of claims 1 to 9, characterised in that the processing circuit (30) has a microprocessor (43) for the purpose of pre-processing the measured values delivered from the integrator (33) and for the purpose of interface adaption.

11. A device according to one of claims 1 to 10, characterised in that the processing circuit (30) has a receiver for remote control pulses.

12. A device according to one of claims 1 to 11, characterised in that a wire covered or wrapped with a textile material, possibly synthetic, serves as a sensor line (3).

13. A device according to one of claims 1 to 12, characterised in that the pipe line (1) is surrounded by an electrically insulating casing (12), which, however, is permeable to moisture, in which are grooved at least two channels (57) extending in the longitudinal direction of the pipe line (1), in which are laid the sensor line (3) and at least one further line, e.g. a return line (13), an earth line (14), the two-wire line (7) etc.

14. A device according to one of claims 1 to 13, characterised in that the length $T_{int}$ of the integration phase of the integrator (33) corresponds to the formula $T_{int} = \frac{1}{f_{stör}} \cdot n$, wherein $f_{stör}$ signifies the fundamental frequency of the occurring interference voltage and n a whole number.

## Revendications

1. Dispositif pour la détermination et la détection de fuites dans une tuyauterie conduisant un milieu humide, en particulier dans une tuyauterie souterraine avec au moins un câble palpeur conducteur électrique posé le long de cette canalisation, de préférence constitué par un fil, câble sur lequel on peut connecter une source d'alimentation électrique, et avec un circuit de mise en oeuvre de la valeur mesurée par le câble palpeur, et en particulier une tension se trouvant à l'extrémité du câble palpeur, dispositif caractérisé par un premier inverseur de pôles (22 ou 23) pour la source d'alimentation (20, 15) appliquée sur le câble palpeur (3), un autre inverseur de pôles (32) pour la grandeur mesurée prélevée par le câble palpeur (3), une mémoire pour la grandeur mesurée en amont de l'inversion de pôles et son addition avec la grandeur mesurée en aval de l'inversion de pôles, et un intégrateur dans lequel sont introduites les grandeurs ainsi mesurées sous forme de grandeurs d'entrée.

2. Dispositif suivant revendication 1, caractérisé en ce que l'intégrateur et la mémoire sont réunis pour former un circuit d'intégration (33) à mémorisation.

3. Dispositif suivant revendication 1 ou 2, caractérisé en ce que l'on peut connecter une source de courant constant (15) sur le câble palpeur (3) par l'intermédiaire du premier inverseur de pôles (23).

4. Dispositif suivant revendication 3, caractérisé en ce que l'on a branché en amont de l'intégrateur (33) un amplificateur (32) avec résistance d'entrée élevée et circuit de protection à résistance élevée (59).

5. Dispositif suivant revendication 4, caractérisé en ce que l'amplificateur (32) est à inversion de pôles et constitue un autre inverseur de pôles.

6. Dispositif suivant l'une des revendications 1 à 5, caractérisé en ce qu'un dispositif de mesure de capacité (18) peut être connecté au câble palpeur (3) par l'intermédiaire du premier inverseur de pôles (23), et en ce que ce dispositif de mesure de capacité reçoit de préférence un dispositif de mesure des résistances de transfert (16a, 16b) entre deux sections (3a, 3b) du câble palpeur séparées l'une de l'autre et la canalisation (1).

7. Dispositif suivant l'une des revendications 1 à 6, caractérisé en ce que l'on a disposé une mémoire séparée (34) en aval de l'intégrateur.

8. Dispositif suivant l'une des revendications 1 à 7, caractérisé en ce que l'on a branché sur le circuit de mise en oeuvre (30) un circuit éloigné d'alimentation en énergie et d'évaluation.

9. Dispositif suivant l'une des revendications 1 à 8, caractérisé en ce qu'une commande numérique séquentielle (26) est prévue pour commander au moins les inverseurs de pôles (23, 32) et l'intégrateur (33), ainsi que la mémoire supplémentaire (34), cette commande séquentielle (26) comportant éventuellement un microprocesseur.

10. Dispositif suivant l'une des revendications 1 à 9, caractérisé en ce que le circuit de mise'en oeuvre (30) comporte un microprocesseur (43) pour le traitement préalable des valeurs mesurées fournies par l'intégrateur (33) et pour l'adaptation de l'interface.

11. Dispositif suivant l'une des revendications 1 à 10, caractérisé en ce que le circuit de mise en oeuvre (30) comporte un récepteur pour les impulsions de télécommande.

12. Dispositif suivant l'une des revendications 1 à 11, caractérisé en ce qu'un fil éventuellement entouré de matières synthétiques ou textiles ou un fil guipé sert de câble capteur (3).

13. Dispositif suivant l'une des revendications 1 à 12, caractérisé en ce que la tuyauterie (1) est entourée d'une enveloppe (12) isolante de l'électricité, mais toutefois perméable à l'humidité, dans laquelle au moins deux canalisations (57) disposées dans le sens longitudinal de la canalisation (1) sont prévues, dans lesquelles sont posés le câble palpeur (3) et au moins un autre câble, par exemple un câble de retour (13), un câble de mise à la terre (14), le câble à deux conducteurs (7), etc.

14. Dispositif suivant l'une des revendications 1 à 13, caractérisé en ce que la longueur $T_{int}$ de la phase d'intégration de l'intégrateur (33) correspond à la formule $T_{int} = \dfrac{1}{f_{stör}} \cdot n$, où $f_{stör}$ est la fréquence fondamentale de la tension perturbatrice et n est un nombre entier.

FIG. 1

FIG. 2

FIG. 3

FIG. 4

FIG. 5

FIG. 6

FIG. 7

11

# FIG. 8

# FIG. 9

$$Uz_1 \begin{cases} U_1 - U_2 \\ + U_1 \\ - U_1 \end{cases}$$

$$Uz_2 = Uz_1 \cdot \frac{T_{INT}}{R \cdot C}$$

# FIG. 10

FIG. II

FIG. 12

FIG. 13

FIG. 14

FIG. 15